Europäisches Patentamt

European Patent Office

Office européen des brevets

(11) Veröffentlichungsnummer: **0 106 905**
**A1**

(12) **EUROPÄISCHE PATENTANMELDUNG**

(21) Anmeldenummer: 82109749.0

(22) Anmeldetag: 22.10.82

(51) Int. Cl.³: **A 47 J 31/10,** A 47 J 31/00,
A 47 J 31/52

(43) Veröffentlichungstag der Anmeldung: 02.05.84
Patentblatt 84/18

(84) Benannte Vertragsstaaten: **AT BE FR GB IT NL SE**

(71) Anmelder: **INTROPA TRADING SA, Ave. Justo
Arosemena y Calle 31, No. 3-80 P.O. Box 7412,
Panama 5 (PA)**

(72) Erfinder: **Nieweg-Wenzel, Brigitte, Vogelruth 15a,
D-4800 Bielefeld 14 (DE)**

(74) Vertreter: **Hanewinkel, Lorenz, Dipl.-Phys. et al,
Patentanwälte Dr.Ing. Heinz Nickels Dipl.-Phys. Lorenz
Hanewinkel Detmolder Strasse 26,
D-4800 Bielefeld 1 (DE)**

(54) **Elektrische Kaffeemaschine.**

(57) Die elektrische Kaffeemaschine besitzt einen mit Frischwasser füllbaren elektrisch beheizten Siederaum (1) mit Heißwasserauslauf, einem unter dem Siederaum (1) angeordneten Filterbecher (7) und einem unter diesem vorgesehenen Aufnahmebehälter (4), vorzugsweise Kanne. Der Heißwasserauslauf ist von mindestens einer einstell- und steuerbaren, in mindestens zwei Stufen nacheinander arbeitenden, zuerst eine geringe Heißwassermenge zum Aufquellen des Kaffeemehls (8) abgebenden und mit Zeitabstand anschließend die Restheißwassermenge zum Brühen des Kaffees in mindestens einem Auslauf abgebenden Düse (6) gebildet, wobei die Düse (6) durch eine Steuerung (11) zeitmäßig geöffnet bzw. geschlossen wird.

Durch dieses stufenweise Kaffeebrühen gibt das Kaffeemehl (8) in vorteilhafter Weise nur in geringem Maße Säure und Bitterstoffe ab und überwiegend werden die Aromastoffe für einen geschmacklich verbesserten Kaffee dem Kaffeemehl (8) entzogen.

- 1 -

## Elektrische Kaffeemaschine

Die Erfindung bezieht sich auf eine elektrische Kaffeemaschine mit einem mit Frischwasser füllbaren, elektrisch beheizten Siederaum mit Heißwasserauslauf, einem unter dem Siederaum angeordneten Filterbecher und einem unter diesem vorgesehenen Aufnahmebehälter, vorzugsweise Kanne.

Derartige Kaffeemaschinen sind in den verschiedensten Ausführungen bekannt geworden. Bei diesen Kaffeemaschinen wird das erhitzte Wasser kontinuierlich in Tropfenform oder als dünner Strahl dem Kaffeemehl zugeführt, so daß durch die ständige Wasserzufuhr das Kaffeemehl stark ausgewaschen (ausgelaugt) wird und dadurch neben den Aromastoffen auch andere SToffe, wie z. B. Säure und Bitterstoffe, vom Kaffeemehl abgegeben werden, was den Aromageschmack des gefilterten Kaffees beeinträchtigt.

Aufgabe der Erfindung ist es deshalb, unter Vermeidung der vorgenannten Mängel, eine Kaffeemaschine zu schaffen, die eine besondere Heißwasserzuführung zum Kaffeemehl

- 2 -

hat, wodurch unter geschmacklicher Verbesserung des gefilterten Kaffees vom Kaffeemehl vorwiegend die Aromastoffe und nicht so sehr geschmackverändernde Stoffe abgegeben werden.

Diese Aufgabe wird erfindungsgemäß dadurch gelöst, daß der Heißwasserauslauf von mindestens einer einstell- und steuerbaren, in mindestens zwei Stufen nacheinander arbeitenden, zuerst eine geringe Heißwassermenge zum Aufquellen des Kaffeemehls abgebenden und mit Zeitabstand anschließend die Restheißwassermenge zum Brühen des Kaffees kontinuierlich oder taktweise abgebenden Düse gebildet ist.

Vorteilhafte Weiterbildungen dieser Aufgabenlösung sind aus den Unteransprüchen zu entnehmen. Der Gegenstand der Erfindung erstreckt sich nicht nur auf die Merkmale der einzelnen Ansprüche, sondern auch auf deren Kombination.

Die erfindungsgemäße Kaffeemaschine arbeitet in vorteilhafter Weise in zwei Stufen, und zwar in einer ersten Aufgußstufe, in der eine geringe Heißwassermenge dem Kaffeemehl zum Aufquellen zugegeben wird, und in einer zweiten Aufgußstufe, die nach der Quellzeit automatisch einsetzt, und in der das restliche Heißwasser in einem kontinuierlichen Aufguß oder in wenigen nacheinander erfolgenden Aufgüssen zum Fertigbrühen des Kaffees in den Filter läuft. Weiterhin wird das Frischwasser in dem Siederaum bis zum Sieden (Kochen) er-

- 3 -

hitzt, so daß zumindest in der ersten Aufgußstufe kochendes Wasser dem Kaffeemehl zugeführt wird, was den Quellvorgang günstig beeinflußt.

Durch dieses Zweistufenverfahren gibt das Kaffeemehl die Aromastoffe ab und nur im geringen Maße Säure und Bitterstoffe, wodurch eine wesentliche Geschmacksverbesserung beim Filterkaffee erzielt wird.

Diese automatisch arbeitende Kaffeemaschine stellt einen Filterkaffee her, wie ihn die Hausfrau manuell zubereiten würde, nämlich zuerst den Quellaufguß und dann den restlichen Endaufguß, wodurch der geschmackreiche Kaffee gebrüht werden kann.

Durch diese Kaffeeherstellart ist eine bessere Ausnutzung des Kaffeearomas gewährleistet.

Die Kaffeemaschine ist einfach und kostensparend aufgebaut und zeigt eine störungsfreie, automatische Arbeitsweise.

0106905

- 4 -

Anhand der Zeichnungen werden nachfolgend Ausführungsbeispiele gemäß der Erfindung näher erläutert. Dabei
zeigt:

Fig. 1    eine schematische Darstellung einer Kaffeemaschine mit einer Heißwasserauslaufdüse
          und Spitzfilter;

Fig. 2    eine schematische Darstellung einer Kaffeemaschine mit zwei Heißwasserauslaufdüsen und
          Schrägfilter;

Fig. 3    ein Schaltbild über die elektrische Steuerung.

Mit 1 ist ein mit Frischwasser füllbarer, eletrisch beheizbarer Siederaum (Kochraum) der erfindungsgemäßen
elektrischen Kaffeemaschine bezeichnet, welcher im oberen
Bereich eines aufstell- oder aufhängbaren Grundkörpers 2
angeordnet ist. Unterhalb dieses Siederaumes 1 befindet
sich ein abnehmbarer Filterbecher (-topf) 3, der durch
Einschieben oder Anhängen am Siederaumboden 1a oder am
Grundkörper 2 lösbar gehalten oder aber auf einem Aufnahmebehälter 4, vorzugsweise Kanne, lösbar aufgesetzt
ist.

Das kalte Frischwasser im Siederaum 1 wird durch elektrische Heizelemente 5, die vorzugsweise oberhalb des
Siederaumbodens 1a vorgesehen sind, bis zum Kochen
(Sieden) (100°C) erhitzt. Des weiteren kann der Siederaum 1 als Durchlauferhitzer ausgebildet sein, in dem
ebenfalls das kalte Frischwasser zum Kochen gebracht wird.

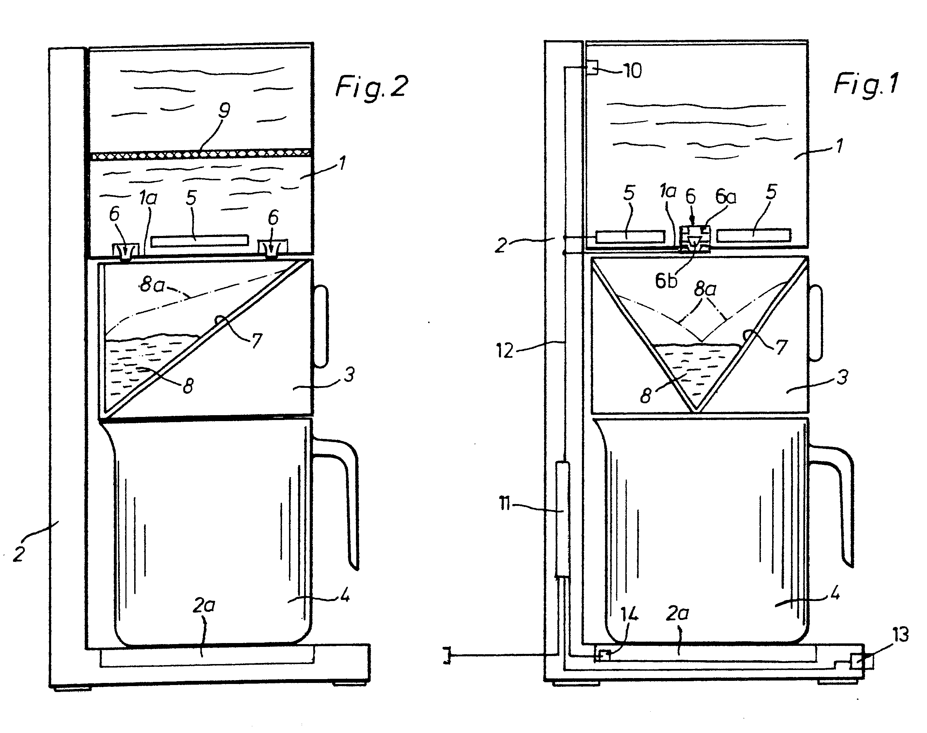

Der Siederaum 1 ist bodenseitig mit mindestens einem Heißwasserauslauf ausgestattet, der von einer einstell- und steuerbaren, in mindestens zwei Stufen nacheinander arbeitenden Düse 6 gebildet ist. Diese Düse 6 gibt zuerst eine geringe Heißwassermenge ab, mit der das sich in der Filtertüte 7 des Filterbechers 3 befindliche Kaffeemehl 8 aufgequellt wird, so daß sich dieses Kaffeemehl 8, wie in den Fig. 1 und 2 in strichpunktierten Linien 8a dargestellt, an der Filterseitenwandung hochzieht (aufquellt) und dadurch eine vergrößerte Aufgußfläche bietet.

Nach einer gewissen eingestellten Quellzeit gibt dann die Auslaufdüse 6 in ihrer zweiten Stufe die Restheißwassermenge zum Brühen des Kaffees ab, was in einem kontinuierlichen oder aber auch in einem taktweisen Auslauf erfolgen kann.

Wenn beispielsweise mit der erfindungsgemäßen Kaffeemaschine zehn Tassen Kaffee gebrüht werden sollen, so würde der erste Auslauf zum Aufquellen des Kaffeemehls z. B. etwa der Wassermenge einer Tasse, und der zweite Auslauf dann der restlichen Wassermenge (neun Tassen) entsprechen.

Beim ersten Auslauf zum Quellen des Kaffeemehls 8 muß das Wasser kochend (mit einer Temperatur von 100°C) aus der Auslaufdüse 6 ausfließen. Beim zweiten Auslauf braucht das Wasser nicht mehr kochend heiß zu sein, sondern es kann etwas abgekaltet sein, also mit einer Temperatur ausströmen, die geringfügig unter dem Siedepunkt liegt.

- 6 -

Wie das Ausführungsbeispiel nach Fig. 1 zeigt, ist die Auslaufdüse 6 im Zentrum (mittig) des Siederaumbodens 1a angeordnet und diese Düse 6 ist so gesteuert, daß sie die zwei Auslaufstufen zeitlich nacheinander durchführt.

Gemäß dem weiteren Ausführungsbeispiel nach Fig. 2 sind zwei Auslaufdüsen 6 vorgesehen, die in den Seitenbereichen des Siederaumbodens 1a liegen. Hierbei dient eine Düse 6 für den ersten Auslauf und die zweite Düse 6 für den zweiten Heißwasserauslauf. Während die erste Düse 6 die Heißwassermenge zum Aufquellen des Kaffeemehls abgibt, bleibt die zweite Düse 6 geschlossen. Erst nach Beendigung der Aufquellzeit öffnet sich die zweite Düse 6 automatisch zur Abgabe des zweiten Heißwasserauslaufes und dann ist die erste Düse 6 geschlossen.

Die Anordnung von zwei Auslaufdüsen 6 ergibt ein noch verbessertes Ausbreiten des Kaffeemehls beim Quellen, da das Heißwasser wechselseitig (jeweils einseitig) zugeführt wird. Auch das einseitige Heißwasserzuführen durch die zweite seitliche Düse 6 trägt zum einwandfreien Kaffeebrühen bei.

Es liegt selbstverständlich im Rahmen der Erfindung, an Stelle von zwei Düsen 6 auch mehrere Düsen 6 einzusetzen und deren Anordnung im Zentrum und auch außermittig im Siederaumboden 1a vorzusehen.

Der Filterbecher 3 kann als Schrägfilter (vgl. Fig. 2), der ein günstiges Hochziehen des Kaffeemehls an der langen schrägen Seite ergibt, oder als Spitztütenfilter (vgl. Fig. 1) ausgebildet sein und bei beiden Filterarten ist die Anordnung einer, zwei oder mehrerer Düsen 6 möglich.

Es ist bevorzugt, in dem Siederaum 1 einen Wasserenthärter 9, vorzugsweise einen Ionenaustauscher, (vgl. Fig. 2) anzuordnen, der den Siederaum 1 in einen oberen Frischwasserbehälter und in den eigentlichen Siederaum, der unterhalb des Enthärters 9 liegt, unterteilt. Hierbei fließt das Frischwasser nach unten durch den Enthärter 9 hindurch.

Als Kaffeeaufnahmebehälter 4 läßt sich jede beliebige Kanne (Glas- oder Keramikkanne) oder eine Warmhaltekanne vorsehen. Auch kann der Grundkörper 2 im Bereich der Aufstellfläche für die Kanne 4 mit einer Heizplatte 2a versehen sein, die fest oder abnehmbar angeordnet ist.

Die elektrische Steuerung für die Düsen 6 und die Heizelemente 5 läßt sich durch bekannte elektrische und elektronische Schalt- und Steuerelemente mit Zeitrelais od. dgl. durchführen, wobei hierbei die Größe der ersten und zweiten Heißwasserauslaufmenge entsprechend der gewünschten Kaffeemenge, einstellbar ist.

- 8 -

Der den Siederaum 1 bildende, am Grundkörper 2 gelagerte Behälter, läßt sich obenseitig mit einem abnehmbaren Deckel oder mit einem Einfüllstutzen zum Einbringen des Frischwassers ausstatten.

Selbstverständlich liegt es auch im Rahmen der Erfindung, wenn an Stelle von Kaffee in der Maschine Tee aufgebrüht wird, so daß sie auch als Teemaschine benutzbar ist.

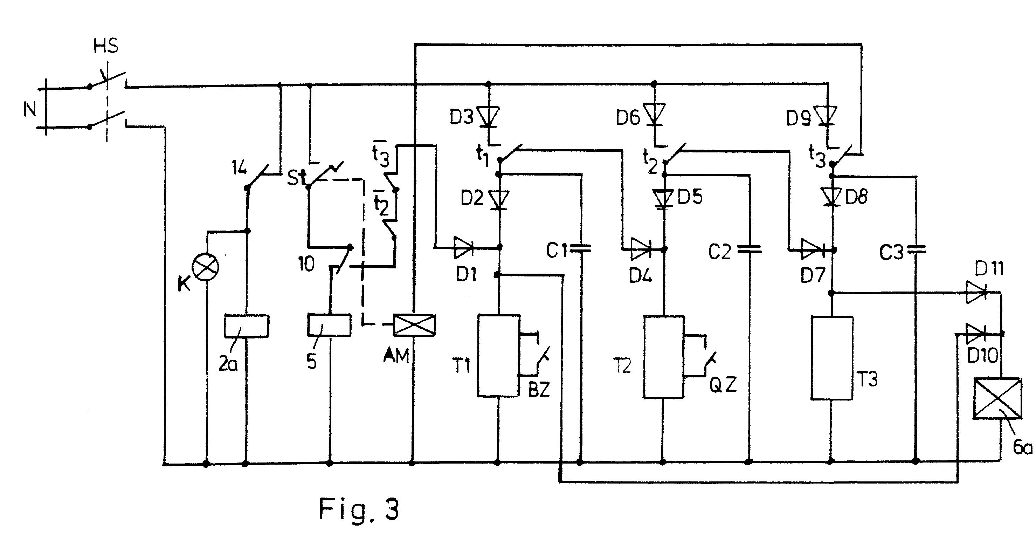

Fig. 3 zeigt eine Schaltungsanordnung der Steuervorrichtung 11. Diese ist eingangsseitig mit einem Netzkabel N verbunden und weiterhin über den Kabelbaum 12 an die Magnetspule 6a zur Steuerung des Kegels 6b in der Düse 6 und der Heizung 5 des Kochraumes, an den Temperaturfühler 10, der den Kochzustand signalisiert, an die Warmhalteheizung 2a, an dem zugehörigen Temperaturfühler 14, der die Warmhaltetemperatur kontrolliert, und an den Bedienungsschaltern 13 (Fig. 2), HS,St,BZ,QZ und einer Kontrollampe K, die am Sockel der Kaffeemaschine angeordnet ist, angeschlossen.

Die Versorgung der Schaltung wird über den Hauptschalter HS eingeschaltet. Der Temperaturfühler 14 steuert das Einschalten der Kontrollampe K und der Warmhalteheizung 2a unabhängig von dem Brühvorgang. Der Brühvorgang wird durch Betätigung des Rasttasters St, der eine elektromagnetische Auslösung AM besitzt, gestartet, in-dem über den Temperaturfühler 10 im Kochraum 1 die Heizung 5 bestromt wird. Sobald die Kochtemperatur erreicht ist, wird mit dem Arbeitskontakt des Temperaturfühlers 10 über Ruhekontakte $\overline{t2}$, $\overline{t3}$ und eine Diode D1 ein Zeitrelais T1 eingeschaltet.

Dieses Zeitrelais kann durch Schließen des Schalters BZ auf zwei unterschiedliche Brühzeiten für eine große oder kleine Kaffeemenge eingestellt werden, nach denen es ausschaltet. Nach dem Einschalten hält sich das Zeitrelais T1 über den Kontakt t1 und Dioden D2, D3 selbst unter Strom, auch wenn der Thermofühler wieder auf Nachheizen umschaltet. Die Diode D1 entkoppelt den Haltestrompfad zur Heizung 5. Außerdem wird über den Kontakt t1 und Diode D10 die Spule 6a des Magnetventils in der Düse 6 bestromt.

Weiterhin wird über den Kontakt ein Kondensator C1 aufgeladen. Die Zeitauslösung des Zeitschalters ist in bekannter Weise über einen Bimetallschalter oder eine Pneumatik vorgenommen.

Sobald die Brühzeit abgelaufen ist und der Kontakt t1 auf der Ruheseite schließt, wird die Ladung des Kondensators C1 über Diode D4 auf ein zweites Zeitrelais T2 geleitet, die dieses zum Einschalten bringt. Es hält sich über Kontakt t2 und die Dioden D5, D6. Das Zeitrelais T2 ist mit dem Schalter QZ auf zwei verschiedene Quellzeiten umschaltbar, die für eine milde oder starke Extraktion jeweils vorgesehen ist. Über den Kontakt t2 und Diode D6 wird ein Kondensator C2 geladen, dessen Ladung über Diode D7 nach Ablauf der Quellzeit über die Ruheseite des Kontaktes t2 ein drittes Zeitrelais

- 10 -

T3 einschaltet, das sich über einen Kontakt t3 und die Dioden D8, D9 hält. Parallel zum Zeitrelais T3 wird über Diode D11 wieder die Spule 6a bestromt, die das Ventil betätigt, so daß das restliche kochende Wasser abläuft.

Die Zeit des Zeitrelais T3 ist dabei so bemessen, daß das gesamte Wasser bei anfangs vollgefülltem Tank abläuft. Während dieser Zeit wird der Kondensator C3 geladen, und nach Abschaltung des Relais T3 wird über die Ruheseite des Kontaktes t3 der Auslösemagnet AM mit der gespeicherten Ladung bestromt, wodurch die Taste St wieder freigegeben wird. Die verschiedenen Dioden dienen jeweils dazu, daß die Auslösung der Relaisschaltvorgänge nur in der Folge T1, T2, T3, AM erfolgt. An dem Starttaster St ist zusätzlich zur Auslösung durch den Magneten AM eine Handauslösung vorgesehen, damit der Vorgang jederzeit unterbrochen werden kann oder nach Stromausfall ein neuer Start erfolgen kann.

Selbstverständlich kann die hier dargestellte Schaltung auch durch äquivalente Mittel ersetzt werden. So ist es möglich, für die Folgeschaltung ein Schrittschaltwerk und für die Zeitbestimmung ein Zeitglied mit unterschiedlichen Zeitvorgaben über die Schrittstufen zu verwenden. Weiterhin können die einzeln dargestellten logischen Verknüpfungen über Dioden und Kontakte durch elektronische Schalter und Gatter vorgenommen werden.

Es ist bevorzugt, das Zeitrelais T1 für eine Zeit von 3,5 s vorzusehen, die durch Umschaltung mit Schalter BZ auf 5 s verlängert wird.

- 11 -

Die Zeit des Zeitrelais T2 wird bevorzugt für die Aufbereitung von mildem Kaffee für eine Zeit von 30 s vorgesehen und durch den Schalter QZ umgeschaltet auf eine Zeit von 60 s für die Herstellung von starkem Kaffee.

Es ist davon auszugehen, daß eine Gesamtmenge von 10 Tassen hergestellt werden kann und die Umschaltung der Vorbrühmenge auf die Zeit für mehr als vier Tassen vorgesehen ist.

- 12 -

Patentansprüche

1. Elektrische Kaffeemaschine mit einem mit Frischwasser füllbaren elektrisch beheizten Siederaum mit Heißwasserauslauf, einem unter dem Siederaum angeordneten Filterbecher und einem unter diesem vorgesehenen Aufnahmebehälter, vorzugsweise Kanne, dadurch gekennzeichnet, daß der Heißwasserauslauf von mindestens einer einstell- und steuerbaren, in zwei Stufen nacheinander arbeitenden, zuerst eine geringe Heißwassermenge zum Aufquellen des Kaffeemehls (8) abgebenden und mit Zeitabstand anschließend die Restheißwassermenge zum Brühen des Kaffees in mindestens einem Auslauf abgebenden Düse (6) gebildet ist.

2. Kaffeemaschine nach Anspruch 1, dadurch gekennzeichnet, daß die Auslaufdüse (6) bzw. -düsen (6) durch elektrische Schalt- und Steuermittel in der Wasser-Auslaufmenge in beiden Stufen sowie im zeitlichen Abstand zwischen beiden Auslaufstufen einstell- und steuerbar sind.

3. Kaffeemaschine nach den Ansprüchen 1 und 2, dadurch gekennzeichnet, daß die Düse (6) in der zweiten Auslaufstufe kontinuierlich oder taktweise Heißwasser abgebend steuerbar ist.

4. Kaffeemaschine nach den Ansprüchen 1 bis 3, dadurch gekennzeichnet, daß im Boden (1a) des Siederaumes (1) eine zentrisch angeordnete Düse (6) vorgesehen ist (Fig. 1).

5. Kaffeemaschine nach den Ansprüchen 1 bis 3, dadurch gekennzeichnet, daß im Boden (1a) des Siederaumes (1) zwei Düsen (6) für je eine Auslaufstufe angeordnet sind und dabei diese beiden Düsen (6) in den Seitenbereichen des Kochraumbodens (1a) sich gegenüberliegen (Fig. 2).

6. Kaffeemaschine nach den Ansprüchen 1 bis 3, dadurch gekennzeichnet, daß im Siederaumboden (1a) mehrere Düsen (6) angeordnet sind, von denen eine oder zwei für die erste Auslaufstufe und die restlichen Düsen (6) für die zweite Auslaufstufe vorgesehen sind.

7. Kaffeemaschine nach den Ansprüchen 1 bis 6, dadurch gekennzeichnet, daß der Siederaum (1) im Bodenbereich mit mindestens einem elektrischen, das kalte Frischwasser zum Kochen ($100^{o}C$) bringenden Heizelement (5) ausgestattet ist.

8. Kaffeemaschine nach den Ansprüchen 1 bis 7, dadurch gekennzeichnet, daß der Siederaum (1) an einem aufstell- oder aufhängbaren Grundkörper (2) lagert und der Filterbecher (3) unter dem Siederaum (1) oder am Grundkörper (2) einschiebbar oder anhängbar gehalten ist sowie der Grundkörper (2) eine feste oder abnehmbare Heizplatte (2a) als Aufstellfläche für die Kanne (4) od. dgl. aufweist.

9. Schaltungsanordnung zur Steuerung der Düse (6), dadurch gekennzeichnet, daß vorzugsweise über einen Rasttaster (St) eine Schaltung eingeschaltet wird, bei der von einem im Kochraum (1) angeordneten Temperaturfühler (10), der die Heizplatte (5) mit einem Ruhekontakt steuert, bei Siedetemperatur über einen Arbeitskontakt ein dreistufiges Schrittschaltwerk eingeschaltet wird, das vorzugsweise aus drei Zeitrelais (T1,T2,T3) besteht, die jeweils über eine Schrittweiterschaltung vorzugsweise aus Dioden (D2 bis D7) und Kondensatoren (C1,C2) so verknüpft sind, daß jeweils nach Zeitablauf eines der Zeitrelais das nächstfolgende eingeschaltet wird, wobei vorzugsweise das erste Zeitrelais (T1) durch einen Schalter (BZ) auf zwei verschiedene Brühzeiten umschaltbar ist und vorzugsweise das zweite Zeitrelais (T2) durch einen weiteren Schalter (QZ) auf zwei verschiedene Quellzeiten umschaltbar ist und das dritte Zeitrelais (T3) auf eine solche Zeit dimensioniert ist, in der der Wasservorrat aus dem Siederaum (1) durch die Düse (6) ablaufen kann, und wobei über das erste und dritte Schaltrelais (T1,T3) eine Spule (6a) der Düse (6) bestromt wird und vorzugsweise über eine am dritten Zeitrelais (T3) angeschlossene weitere Schrittweiterschaltung (D8,D9,C3) ein Auslösemagnet (AM) des Rasttasters (St) bestromt wird.

10. Schaltungsanordnung nach Anspruch 9, dadurch gekennzeichnet, daß Entkopplungsmittel, vorzugsweise Dioden (D10,D11,D1) und Ruhekontakte ($\overline{t2},\overline{t3}$)
des Zeitrelais (T2,T3) vor die Spule (6a) bzw.
das erste Zeitrelais (T1) geschaltet sind, so
daß nach einer Betätigung des Rasttasters (St)
die Schaltfolge nur einmal und folgerichtig durchlaufen wird.

Fig.2

Fig.1

0106905

Fig. 3

Europäisches
Patentamt

**EUROPÄISCHER RECHERCHENBERICHT**

0106905

Nummer der Anmeldung

EP 82 10 9749

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-1 253 249 (BERTOGLIO) <br> * Insgesamt * | 1,2,9, 10 | A 47 J 31/10 <br> A 47 J 31/00 <br> A 47 J 31/52 |
| | --- | | |
| X | DE-B-1 166 988 (ASSMANN & SÖHNE) <br> * Insgesamt * | 1 | |
| | --- | | |
| X | CH-A- 405 655 (CORY CORP.) <br> * Seite 3, Zeile 56 - Seite 5, Zeile 82 * | 1-3,9 | |
| | --- | | |
| X | DE-C- 700 822 (ILLY) <br> * Insgesamt * | 1,8,9 | |
| | --- | | |
| X | US-A-3 356 010 (EISENDRATH) <br> * Spalte 1, Zeilen 29-37; Spalte 3, Zeile 45 - Spalte 4, Zeile 15 * | 1 | RECHERCHIERTE SACHGEBIETE (Int. Cl. ³) |
| | --- | | A 47 J |
| X | US-A-2 935 012 (MARTIN) <br> * Insgesamt * | 1 | |
| | --- | | |
| A | DE-A-2 714 736 (HUSQVARNA) <br><br> * Seite 6, Zeile 1 - Seite 9, Zeile 7 * | 1,2,5, 7,8 | |
| | ---     -/- | | |

Der vorliegende Recherchenbericht wurde für alle Patentansprüche erstellt.

| Recherchenort <br> DEN HAAG | Abschlußdatum der Recherche <br> 23-06-1983 | Prüfer <br> SCHARTZ J. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 423 209 (WEBER) <br><br> * Insgesamt * | 1,4,7 8 | |
| A | DE-U-1 973 093 (PATZNER) <br> * Insgesamt * | 3 | |
| E | DE-A-3 116 332 (UHT) <br> * Insgesamt * | 1-7 | |

|  | RECHERCHIERTE SACHGEBIETE (Int. Cl. ³) |
|---|---|

Der vorliegende Recherchenbericht wurde für alle Patentansprüche erstellt.

| Recherchenort <br> DEN HAAG | Abschlußdatum der Recherche <br> 23-06-1983 | Prüfer <br> SCHARTZ J. |
|---|---|---|